# EUROPÄISCHE PATENTANMELDUNG

(11) **EP 3 165 505 A1**
(43) Veröffentlichungstag der Anmeldung: **10.05.2017**
(21) Anmeldenummer: 16197102.3
(22) Anmeldetag: 03.11.2016
(51) Int. Cl.: C01B 21/26, C01B 21/28, C01B 21/40, C01B 21/42

(54) **VERFAHREN ZUR HERSTELLUNG VON PEROXOSALPETERSÄURE**

(30) Priorität: 03.11.2015 DE 102015014185
(71) Anmelder: Messer Group GmbH, 65812 Bad Soden (DE); Messer Technogas s.r.o., 140 02 Praha (CZ)
(72) Erfinder: Bachleitner, Dr. Walter, 4600 Wels (AT); Bek, Dr. David, 15300 Prag (CZ)

(57) **Zusammenfassung**

Zur Herstellung von Peroxosalpetersäure (HNO₄) sowie seiner Abbauprodukte Wasserstoffperoxid (H₂O₂) und Salpetersäure (HNO₃) wird ein Stickoxide enthaltendes Gas und/oder eine Stickoxide enthaltende, wässerige Lösung erzeugt, die in einem Gas-Flüssig-Reaktor in eine Atmosphäre aus einem kalten sauerstoffreichen Gas eingesprüht wird. Bei hinreichend tiefen Temperaturen entsteht eine HNO₄-haltige Lösung, die in der Folge in weiteren chemischen Prozessen eingesetzt, insbesondere durch weitere Trennverfahren, wie Rektifikation, Vakuumdestillation, o.ä., in seine stabilen Bestandteile H₂O₂ und HNO₃ aufgetrennt werden kann. Bevorzugt entstammt die Stickoxide enthaltende Lösung dabei aus einem Prozess zur Herstellung von Salpetersäure.

## Beschreibung

Die Erfindung betrifft ein Verfahren zum Herstellen von Peroxosalpetesäure.

Die Herstellung von Peroxosalpetersäure erfolgt derzeit im Labor durch Einwirkung von trockenem Wasserstoffperoxid (H₂O₂) auf kristallines Distickstoffpentoxid (N₂O₅) bei sehr tiefen Temperaturen von etwa -80 °C:

(1) N₂O₅ + H₂O₂ ⇆ O₂N-O-OH + HNO₃

In dem Fachaufsatz von E.H. Appelman und D.J. Goszola: "Aqueous Peroxynitric Acid (HOONO2) - A Novel Synthesis and Some Chemical and Spectroscopic Properties"; Inorg. Chem. 1995, 34, 787-791 wird zudem die Bildung von HNO₄ aus HNO₂ unter der Einwirkung von H₂O₂ im Überschuss bei Temperaturen um ca. 0°C beschrieben:

(2) HNO₂ + 2 H₂O₂ ⇆ O₂N-O-OH + 2 H₂O

In diesem Fachaufsatz wird die Möglichkeit der Herstellung einer bis zu 1,5 molaren Lösung von HNO₄ berichtet, welche bei 0°C eine Halbwertszeit von ca. 30 min aufweist. Peroxosalpetersäure ist in hohen Konzentrationen sehr instabil und zerfällt in wässriger Lösung analog folgender Reaktionsgleichung:

(3) HNO₄ + H₂O ⇆ HNO₃ + H₂O₂

Die bisher bekannten Verfahren sind schon aufgrund des dazu notwendigen Einsatzes von teurem Wasserstoffperoxid kaum geeignet, Peroxosalpetersäure in größeren Mengen ökonomisch sinnvoll herzustellen.

Aufgabe der vorliegenden Erfindung ist, ein alternatives Verfahren zum Herstellen von Peroxosalpetersäure anzugeben, das wirtschaftlicher als die bekannten Verfahren ist.

Diese Aufgabe wird durch ein Verfahren mit den Merkmalen des Patentanspruchs 1 gelöst. Vorteilhafte Ausgestaltungen sind in den Unteransprüchen angegeben.

Das zur Durchführung des erfindungsgemäßen Verfahrens benötigte Stickoxide enthaltende Gas bzw. die Stickoxide enthaltende Lösung fällt großtechnisch beispielsweise bei einem Verfahren zum Herstellen von Salpetersäure nach dem Ostwald-Verfahren an, etwa in Form von Rohsäure, die einem Absorptionsturm der Salpetersäure-Produktionsanlage entnommen wird. Die Lösung kann aber beispielsweise auch aus einem Prozess gewonnen werden, bei dem NOₓ in einem Abgasstrom vorliegt, beispielsweise bei der Umsetzung eines Nitrits, etwa NaNO₂, mit einer Mineralsäure. Das Stickoxide enthaltende Gas bzw. die Stickoxide enthaltende Lösung wird einem Gas-Flüssig-Reaktor (im Folgenden auch kurz "Reaktor" genannt) zugeführt, in dem eine kalte, sauerstoffreiche Atmosphäre vorliegt. Dort wird es bzw. sie in der im Folgenden näher beschriebenen Weise zu einer Peroxosalpetersäure enthaltenden Lösung umgesetzt.

In der EP 0 384 565 A1 wird ein Verfahren zur Behandlung von stickoxidhaltigen Gasen beschrieben. Dabei werden die stickoxidhaltigen Gase einem Absorptionsturm zugeführt und mit Wasser zu einer Salpetersäure (HNO₃) und salpetrige Säure (HNO₂) enthaltende wässerige Lösung umgesetzt. Die Lösung wird einem Reaktor zugeführt und dort in einer sauerstoffreichen Atmosphäre versprüht. Die im Reaktorsumpf anfallende, mit Salpetersäure angereicherte Flüssigkeit wird anschließend in den Absorptionsturm zurückgeführt. Dabei soll im Reaktor in der zugeführten Lösung enthaltenes HNO₂ mit Sauerstoff zu HNO₃ oxidieren und gleichzeitig die Bildung von Stockstoffmonoxid (NO) unterdrückt werden. Eine Entstehung von Peroxosalpetersäure während des Prozesses wird in dieser Druckschrift nicht erwähnt.

Überraschend wurde nun festgestellt, dass bei einem derartigen Prozess im Reaktor in erheblichem Umfang Peroxosalpetersäure (HNO₄) anfällt, wenn das Einsprühen der Lösung in die sauerstoffreiche Atmosphäre bei einer hinreichend niedrigen Temperatur erfolgt. Dabei ist die Erzeugung von HNO₄ umso stärker ausgeprägt, je kälter die sauerstoffreiche Atmosphäre im Reaktor während der Zuführung der Stickoxide enthaltenden Lösung ist. Als "hinreichend" niedrige Temperatur wird eine Temperatur unterhalb der Umgebungstemperatur (20°C) angesehen; bevorzugt jedoch wird die Atmosphäre im Gas-Flüssig Reaktor vor oder während der Zuführung der Stickoxide enthaltenden Lösung auf eine Temperatur möglichst nahe dem Gefrierpunkt der Stickoxide enthaltenen Lösung gebracht, der je nach Konzentration einen Wert von unter 10°C, meist zwischen 0°C und -40°C beträgt. Bevorzugt wird die Atmosphäre dabei auf eine Temperatur zwischen 0,1 K und 5 K über dem Gefrierpunkt der sich bildenden HNO₄-haltigen Lösung abgekühlt. Die HNO₄ enthaltende Lösung wird abgezogen und in nachfolgenden chemischen Prozessen aus Ausgangsprodukt eingesetzt. Insbesondere wird durch das erfindungsgemäße Verfahren - neben der Verwendung des Verfahrens zur Herstellung von HNO₄ selbst - eine ökonomisch sinnvolle Form der Herstellung von Wasserstoffperoxid (H₂O₂) und hochkonzentrierter Salpetersäure (HNO₃) eröffnet, die als Zerfallsprodukte des HNO₄ bereits in der Lösung anfallen und durch bekannte Trennmethoden, wie Rektifikation, Vakuumdestillation o.ä., in Reinform gewonnen werden können.

Die beim erfindungsgemäßen Verfahren mutmaßlich ablaufenden Reaktionen können der Reihe nach wie folgt beschrieben werden:
Die Zerstäubung einer Stickoxide enthaltenden Lösung im Reaktor führt dazu, dass die in der flüssigen Phase gelösten Gase NO, NO₂ und deren Dimere N₂O₂, N₂O₃ und N₂O₄ sowie das sehr reaktionsträge N₂O in beträchtlichem Maße in den Gasraum übergeführt werden:

   (4) NₓO_{y(fl)} ⇆ NₓO_{y(g)} NₓO_{y} =̂ NO, N₂O, N₂O₂, N₂O₃, N₂O₄

Die dimeren NₓO_{y} - Verbindungen spalten teilweise homolytisch in monomere NOₓ-Radikale auf:

(5) ON-NO ⇆ 2•NO

(6) ON-NO₂ ⇆ •NO + •NO₂

(7) O₂N-NO₂ ⇆ 2 •NO₂

Durch Reaktion mit dem im Gasraum des Reaktors im Überschuss vorhandenen Sauerstoff-Diradikalen bilden sich Peroxy-Radikale:

(8) ON• + •O-O• ⇆ ON-O-O• (Peroxynitrit-Radikal)

(9) O₂N• + •O-O• ⇆ O₂N-O-O• (Peroxynitrat-Radikal)

Die Bildung der Peroxy-Radikale ist durch den hohen Überschuss an im Gasraum befindlichen Sauerstoff-Molekülen besonders begünstigt. Die entstehenden, hochreaktiven Radikale reagieren mit den fein verteilten Wasser/Säure-Tröpfchen, wobei aus dem Peroxynitrit-Radikal die extrem kurzlebige peroxysalpetrige Säure (ON-O-OH) entsteht, die anschließend mit den in der Lösung vorliegenden gelösten NO- bzw. NO₂-Molekülen rasch zu salpetriger Säure bzw. Salpetersäure reagieren:

(10) ON-O-O• + H₂O ⇆ [ON-O-OH] + •OH

(11) •OH + •NO → HNO₂

(12) •OH + •NO₂ → HNO₃

Das Peroxynitrat-Radikal reagiert mit Wasser zu Peroxosalpetersäure:

(13) O₂N-O-O• + H₂O → HNO₄+•OH

Das dabei entstehende Hydroxyd-Radikal (•OH) reagiert wiederum gemäß den GI. (11), (12) zu salpetriger Säure bzw. Salpetersäure.

Möglich ist auch eine direkte Reaktion des in der Lösung vorhanden Stickstoffdioxids (NO₂) bzw. seines Dimers Distickstofftetraoxid (N₂O₄) mit Wasser und Sauerstoff zu Salpetersäure und Peroxosalpetersäure:

(14) O₂N-NO₂ + O₂ + H₂O → HNO₄ + HNO₃

Die Peroxosalpetersäure enthaltende Lösung sammelt sich im Sumpf des Reaktors und kann anschließend in weiteren chemischen Reaktionen eingesetzt werden.

Die erfindungsgemäße Herstellung einer HNO₄ enthaltenden Lösung aus Sauerstoff, Wasser und NO₂ und/oder HNO₂ stellt gegenüber der literaturbekannten Synthese von Peroxosalpetersäure aus überschüssigem H₂O₂ und HNO₂ eine wirtschaftlich deutlich verbesserte Methode dar.

Aufgrund des nach wie vor hohen Sauerstoffanteils wird das aus dem Gas-Flüssig-Reaktor abgezogene Abgas bevorzugt einer weiteren Verwendung zugeführt. In einer besonders bevorzugten Ausgestaltung wird das sauerstoffreiche Abgas in einem Prozess zur Herstellung von Salpetersäure eingesetzt, um die Effizienz des Verfahrens zu verbessern. Eine solche Effizienzsteigerung durch Zuführung von Sauerstoff oder eines sauerstoffreichen Gases wird beispielsweise in der DE 10 2013 002 201 A1, der EP 1 013 604 A1 oder der EP 0 808 797 A2 beschrieben, auf die hier ausdrücklich Bezug genommen wird. Beispielsweise wird das sauerstoffreiche Abgas aus dem Reaktor in eine Steigleitung eingespeist, durch welche eine Salpetersäure enthaltende Lösung in den Kopfraum einer Absorptionskolonne eingebracht wird.

Die beim erfindungsgemäßen Verfahren erzeugte Peroxosalpetersäure enthaltende Lösung ist vielfältig einsetzbar. Durch den peroxidischen Charakter von HNO₄ eignet sie sich insbesondere als Oxidationsmittel für den Einsatz in einer Vielzahl von chemischen Synthese-Reaktionen in der organischen wie auch anorganischen Chemie.

In einer bevorzugten Ausführungsform wird die erfindungsgemäß erhaltene Peroxosalpetersäure enthaltende Lösung in einem Verfahren zur Erzeugung von Salpetersäure eingesetzt. Die Umwandlung der Peroxosalpetersäure erfolgt dabei beispielsweise nach folgenden Reaktionen:

(14) O₂N-O-OH + HNO₂ → 2 HNO₃

(15) O₂N-O-OH + 2 NO + H₂O → HNO₃ + 2 HNO₂

(16) O₂N-O-OH + N₂O₃ + H₂O → 2 HNO₃ + HNO₂

(17) O₂N-O-OH + N₂O₄ + H₂O → 3 HNO₃

und

(18) 3 HNO₂ ⇆ HNO₃ + 2 NO↑

In weiteren besonders vorteilhaften Ausgestaltung der Erfindung wird die erfindungsgemäß erhaltene HNO₄-haltige Lösung durch weitere Trennverfahren in seine stabilen Bestandteile H₂O₂ und HNO₃ aufgetrennt. Die Erfindung ermöglicht auf diese Weise eine besonders wirtschaftliche und großtechnisch nutzbare Herstellung von Wasserstoffperoxid und/oder von hochkonzentrierter Salpetersäure.

Vorteilhafterweise entstammt die Stickoxide enthaltende Lösung einem Prozess zur Erzeugung von Salpetersäure, bevorzugt nach dem Ostwald Verfahren. In diesem Fall wird beispielsweise die in einer für den Prozess zur Erzeugung von Salpetersäure eingesetzten Absorptionskolonne gebildete Flüssigkeit entnommen und dem Reaktor zugeführt. Die Flüssigkeit enthält neben Stickoxiden Salpetersäure sowie salpetrige Säure und wird im Folgenden kurz "Salpetersäure enthaltende Lösung" genannt. Die Entnahme der Salpetersäure enthaltenden Lösung erfolgt dabei möglichst am Beginn des Absorptionsprozesses, da hier die höchsten Konzentrationen an HNO₂ gebildet werden. Besonders bevorzugt wird daher Schwachsäure aus dem Kühler / Kondensator verwendet, welcher der Absorptionskolonne vorgeschaltet ist. Des Weiteren kann Salpetersäure enthaltende Lösung aus den unteren bzw. mittleren Böden der ersten oder einer weiteren Absorptionskolonne eingesetzt werden. Beispielsweise kann die Salpetersäure enthaltende Lösung im Bereich des Wehrs eines Siebbodens oder am unteren Ausgang eines Ablaufschachts, der die Flüssigkeit von einem Siebboden zu dem darunterliegenden Siebboden unter der Wirkung der Schwerkraft ableitet, entnommen werden. Eine Entnahme ist jedoch auch im Bereich der nicht gesiebten Bodenplatte der Absorptionskolonne möglich.

Alternativ oder ergänzend zu dem oben genannten Verfahren, bei dem das Stickoxide enthaltende Gas bzw. die Stickoxide enthaltende Lösung in einem Verfahren zur Herstellung von Salpetersäure gewonnen wird, wird die Stickoxide enthaltende Lösung durch Umsetzung eines Nitrits (Y-NO₂) mit einer Mineralsäure gewonnen. Bevorzugte Nitrite sind dabei Natriumnitrit NaNO₂, Kaliumnitrit (KNO₂), Ammoniumnitrit (NH₄NO₂), Calciumnitrit (Ca(NO₂)₂) oder Magnesiumnitrit (Mg(NO₂)₂). Als bevorzugte Mineralsäure kommt Salpetersäure, Salzsäure oder jede andere Säure in Betracht, die mit dem Nitrit unter Bildung von HNO₂ und einem Salz reagiert. Die Reaktion erfolgt dabei bevorzugt unter einer erhöhten Temperatur zwischen 10°C und 90°C, besonders bevorzugt bei Temperaturen knapp unterhalb der (druckabhängigen) Siedetemperatur des Gemisches, um die anschließende Zersetzung der salpetrigen Säure (HNO₂) unter Bildung von Stickoxiden zu beschleunigen. Es entsteht ein Stickoxide enthaltendes Gas, das bevorzugt durch Kühlung in einem Wärmetauscher oder durch Zugabe von tiefkaltem gasförmigem oder flüssigen Sauerstoff auf eine Temperatur von bevorzugt unter 0°C abgekühlt und dem Reaktor zugeführt wird.

Eine wieder vorteilhafte, insbesondere großtechnisch zu nutzende Möglichkeit zur Bereitstellung von möglichst konzentriertem Stickoxide enthaltendem Gas bzw. einer Stickoxide enthaltenden Lösung besteht in der Bereitstellung eines Reaktors, in dem Ammoniak und Sauerstoff und/oder ein sauerstoffreiches Gas zur Reaktion gebracht wird. So wird im sogenannten Direktoxidationsverfahren zur Herstellung hochkonzentrierter Salpetersäure in einem ersten Schritt Ammoniak konventionell mit Luftsauerstoff oxidiert und anschließend durch rasche Abkühlung das bei der Reaktion entstehende Wasser abgetrennt. Das übrigbleibende NOx enthaltende Gasgemisch wird anschließend weiter abgekühlt und dadurch das hauptsächlich gebildete N₂O₄ in flüssiger Phase abgetrennt, das als Stickoxid enthaltende Lösung im erfindungsgemäßen Verfahren zur Herstellung von HNO₄ einsetzbar ist.

Zur Herstellung der wässerigen, Stickoxide enthaltenden Lösung wird Wasser zugeführt, dass als reines, deionisiertes Wasser einer Ionenaustauscher-Aufbereitungsanlage entnommen wird oder wässrigen Lösungen aus anderen Industrieprozessen entstammt.

Zur Durchführung des erfindungsgemäßen Verfahrens eignet sich besonders eine Vorrichtung, die eine Apparatur zur Herstellung eines Stickoxide enthaltendes Gases und/oder einer Stickoxide enthaltenden Lösung sowie einen Gas-Flüssig-Reaktor aufweist, in den eine in einer Düse mündende Zuführung für das Stickoxide enthaltendes Gas und/oder für die Stickoxide enthaltende Lösung, eine Sauerstoffzuführung, eine Ableitung für eine in einem Sumpf des Reaktors sich bildenden Flüssigkeit und eine Ausleitung für Abgas einmünden, und die mit einer Einrichtung zur Kühlung des dem Gas-Flüssig-Reaktor zuzuführenden Stickoxide enthaltenden Gases oder der Stickoxide enthaltenden Lösung und/oder des dem Reaktor zuzuführenden Sauerstoffs ausgerüstet ist.

Als Reaktor kommt bevorzugt ein geschlossener, aufrecht stehender und druckfester Behälter zum Einsatz, der mit mindestens einer Füllkörperkolonne ausgerüstet ist. Der Ausdruck "Einrichtung zum Kühlen" wird hier sehr allgemein verstanden und umfasst neben üblichen Kühleinrichtungen, wie Kältemaschinen oder Wärmetauschern, insbesondere auch eine Anlage, die den Sauerstoff in flüssiger Form oder als kaltes Gas bereitstellt, beispielsweise ein Verflüssiger mit oder ohne nachgeschalteten Luftverdampfer. Eine oder mehrere derartiger Einrichtung/en zum Kühlen kann/können beispielsweise innerhalb des Reaktors zur direkten Kühlung der Reaktoratmosphäre angeordnet sein und/oder in den Zuführleitungen für das Stickoxide enthaltende Gas bzw. die Stickoxide enthaltende Lösung und/oder die Sauerstoffzuführung. Eine Regeleinrichtung zur Einstellung der Temperatur der Atmosphäre auf einen bestimmten Abstand von der Gefriertemperatur der sich bildenden HN04-haltigen Flüssigkeit sollte ebenfalls vorhanden sein.

Bei der Apparatur zur Herstellung eines Stickoxide enthaltendes Gases und/oder einer Stickoxide enthaltenden Lösung handelt es sich beispielsweise um einen Absorptionsturm oder einen Kondensator aus einer Anlage zur Erzeugung von Salpetersäure. In einer alternativen Ausgestaltung handelt es sich bei der Apparatur um einen Behälter, der mit einer Zuleitung für eine Mineralsäure und mit einer Zuführung für ein Nitrit ausgerüstet ist. Das Stickoxide enthaltendes Gas und/oder die Stickoxide enthaltenden Lösung wird dabei aus der Reaktion des Nitrits mit der Mineralsäure gewonnen wird, wobei in einer besonders vorteilhaften Ausgestaltung der Reaktor und/oder wenigstens eine Zuleitung für einen der Reaktanden mit einer Heizeinrichtung ausgerüstet ist.

Die Vorrichtung zur Durchführung des erfindungsgemäßen Verfahrens ist bevorzugt dadurch gekennzeichnet, dass der Gas-Flüssig-Reaktor mindestens zwei, jeweils voneinander durch einen Gasraum getrennte, Füllkörper- oder Packungskolonnen aufweist. Die Füllkörperkolonnen werden beispielsweise mit Raschig-Ringen oder vergleichbaren Füllkörpern gepackt. Unabhängig davon, ob im Reaktor eine oder mehrere Füllkörperkolonnen vorgesehen ist/sind, sollte darauf geachtet werden, dass im Betrieb des Reaktors die Verweilzeit der Stickoxide enthaltenden Lösung zwischen10s bis 300s, bevorzugt zwischen 15s und 90s beträgt.

Anhand der Zeichnungen sollen Ausführungsbeispiele der Erfindung näher erläutert werden. In schematischen Ansichten zeigen:
Fig. 1: den Schaltplan einer mit dem erfindungsgemäßen Verfahren arbeitenden Produktionsanlage zum Herstellen von Salpetersäure,
Fig. 2: den Schaltplan einer nach dem erfindungsgemäßen Verfahren arbeitenden Anlage zur Herstellung von Peroxosalpetersäure.

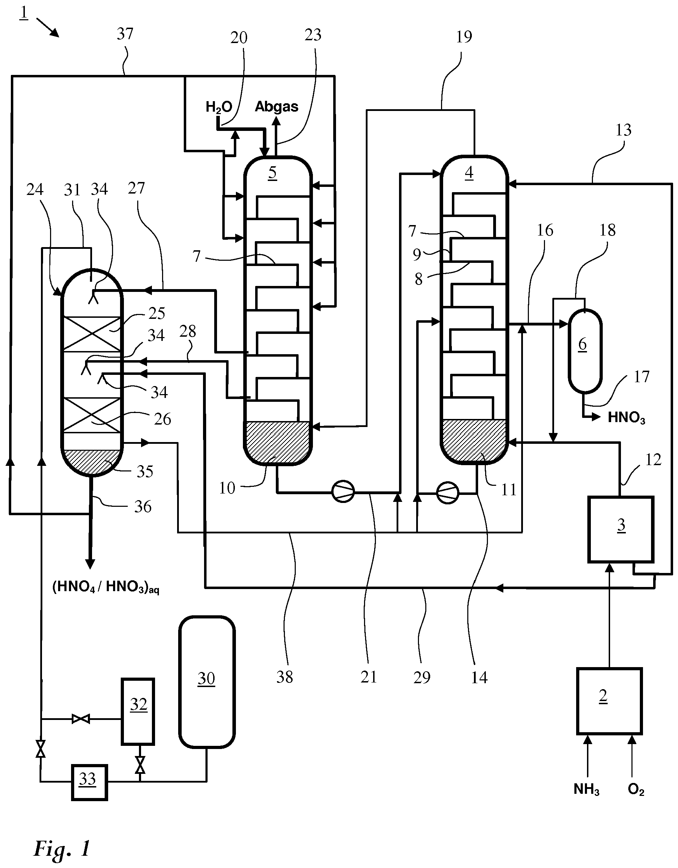

Die in Fig. 1 gezeigte Produktionsanlage 1 zur Herstellung von Salpetersäure umfasst in an sich bekannter Weise eine Anlage 2 zur Ammoniakverbrennung, einen Kondensator 3, mehrere, im Ausführungsbeispiel zwei, Absorptionstürme 4, 5 und eine Bleichkolonne 6. Bei den Absorptionstürmen 4, 5 handelt es sich im Ausführungsbeispiel um Niederdruck-Kolonnen, die bei einem Betriebsdruck von 2 bis 5 bar(g) arbeiten; jedoch können auch Mitteldruck- oder Hochdruckkolonnen mit einem Betriebsdruck von bis zu 15 bar(g) zum Einsatz kommen. Jede der Absorptionskolonnen ist mit Siebböden 7 ausgerüstet, von denen in Fig. 1 aus Gründen der Übersichtlichkeit nur wenige Siebböden angedeutet sind, von denen wiederum jeweils nur ein Siebboden mit einem Bezugszeichen markiert ist. Jeder der Siebböden 7 ist in an sich bekannter Weise mit einem Ablaufwehr 8 und einem Ablaufschacht 9 ausgerüstet, der eine Flüssigströmungsverbindung zum jeweils darunterliegenden Siebboden 7 herstellt. Jeder der Absorptionstürme 4, 5 weist zudem einen Sumpf 10, 11 auf, in dem sich flüssige Reaktionsprodukte aus der im jeweiligen 4, 5 Absorptionsturm stattfindenden Reaktion ansammeln.

Die Anlage 2 dient dazu, gasförmigen Ammoniak und Sauerstoff bei einer Temperatur zwischen 600°C und 900°C katalytisch zu Stickstoffmonoxid und Wasserdampf umzusetzen. Als Sauerstoff wird dabei üblicherweise Luftsauerstoff eingesetzt, jedoch kann auch reiner Sauerstoff mit einem Sauerstoffgehalt von >95 Vol.-% oder ein sonstiges sauerstoffhaltiges Gas zum Einsatz kommen. Die Reaktionsprodukte der in der Anlage 2 ablaufenden Reaktion, im Wesentlichen Stickstoffmonoxid und Wasserdampf, werden zusammen mit überschüssigem Sauerstoff dem Kondensator 3 zugeführt, in dem die Reaktionsprodukte durch thermischen Kontakt mit einem Kühlmedium auf eine Temperatur abgekühlt werden, bei der der Wasserdampf kondensiert, beispielsweise auf 60°C bis 80°C. Ein Teil des Stickstoffmonoxids oxidiert mit überschüssigem Sauerstoff zu Stickstoffdioxid bzw. zu dessen Dimer Distickstofftetraoxid. Ein Teil der Stickoxide reagiert mit dem Wasser zu Salpetersäure, die sich am Boden des Kondensators 3 in einer wässerigen Lösung abscheidet, in dem zudem im beträchtlichem Umfang Stickoxide, insbesondere NO, N₂O, N₂O₂, N₂O₃, N₂O₄ eingelöst sind. Das im Kondensator 3 vorhandene Gasgemisch wird über eine Gaszuleitung 12 in einen unteren Bereich des Absorptionsturms 4 eingeleitet. Die wässerige, Salpetersäure und Stickoxide enthaltende Lösung aus dem Boden des Kondensators 3 wird über eine Steigleitung 13 dem Kopfraum des Absorptionsturms 4 zugeführt.

Wässerige, Salpetersäure und Stickoxide enthaltende Lösung aus dem Kondensator 3 wird mittels einer hier nicht näher erläuterten Düsenanordnung in den Kopfraum des Absorptionsturms 4 eingesprüht, sinkt nach unten und kommt dabei mit den von unten aufsteigenden, stickoxidhaltigen Gasen in Kontakt. Dabei reagieren weitere Anteile der im Gasgemisch enthaltenen Stickoxide mit Wasser und dem im Gasgemisch enthaltenen Sauerstoff zu Salpetersäure, die sich in einer wässerigen Lösung im Bodenbereich des Absorptionsturms 4 ansammelt. Diese wässerige, Salpetersäure und Stickoxide enthaltende Lösung wird über eine Steigleitung 14 abgezogen und in einem mittleren Bereich des Absorptionsturms 4 eingesprüht.

In den Kopfraum des Absorptionsturms 5 wird Wasser aus einer Wasserzuleitung 20 eingesprüht. Das von unten aufsteigende, stickoxidhaltige Gasgemisch kommt im Absorptionsturm 5 mit dem eingesprühten Wasser in Kontakt und reagiert zumindest teilweise mit diesem und im Gasgemisch enthaltenem Sauerstoff zu Salpetersäure, während sich ein Teil der Stickoxide im Wasser löst. Die entstehende, Salpetersäure und Stickoxide enthaltende Lösung sammelt sich am Boden des Absorptionsturms 5 und wird anschließend über eine Steigleitung 21 abgezogen und am Kopf der Absorptionskolonne 4 eingesprüht.

Im unteren Bereich des Absorptionsturms 4 wird Salpetersäure und Stickoxide enthaltende Lösung abgezogen und über eine Ableitung 16 der Bleichkolonne 6 zugeführt, gebleicht und über eine Produktausleitung 17 abgeführt. In der Bleichkolonne fällt wiederum stickoxidhaltiges Gas an, das über eine Leitung 18 in die Gaszuleitung 12 und über diese in den Absorptionsturm 4 eingeleitet wird.

Das im Absorptionsturm 4 verbliebene, stickoxidhaltige Gasgemisch wird über eine Gasableitung 19 abgeführt und in einen unteren Bereich des Absorptionsturms 5 eingeleitet. Im Absorptionsturm 5 noch vorhandenes Gasgemisch wird über eine Abgasleitung 23 abgeleitet und einer hier nicht gezeigten Einrichtung zur Entstickung zugeführt, in der die verbliebenen Stickoxide weitestgehend aus dem Gasgemisch entfernt werden.

Zur Erzeugung einer Peroxosalpetersäure-haltigen Lösung ist ein Gas-Flüssig-Reaktor 24 vorgesehen. Der im Wesentlichen rohrförmig ausgebildete Reaktor 24 umfasst mehrere, im Ausführungsbeispiel zwei, Füllkörperkolonnen 25, 26, die jeweils durch einen Gasraum voneinander getrennt sind. Die Füllkörperkolonnen 25, 26 sind mit geeigneten Füllkörpern, beispielsweise Raschig-Ringen, gefüllt. Die Höhe und der Durchmesser der Füllkörperkolonnen 25, 26 richtet sich nach der Durchflussmenge und der einzustellenden Verweilzeit der Reaktanden; bevorzugt beträgt die durchschnittliche Verweilzeit in jeder der Füllkörperkolonnen 25, 26 zwischen 15s und 90s. Über Zuleitungen 27, 28 wird Flüssigkeit aus dem Bereich jeweils eines Siebbodens 7 einer oder mehrerer Absorptionskolonnen 4, 5, (im Ausführungsbeispiel aus der Absorptionskolonne 5) abgezogen und jeweils oberhalb einer Füllkörperkolonne 25, 26 eingesprüht. Die Siebböden 7, von denen die Flüssigkeit entnommen wird, befinden sich bevorzugt im unteren Bereich der Absorptionskolonne 5, beispielsweise handelt es sich um solche aus der Gruppe der (im geodätischen Sinne) untersten zehn Siebböden 7 der Absorptionskolonne 5. Die Entnahme der Flüssigkeit erfolgt beispielsweise im Bereich eines Ablaufwehrs 8 oder eines Ablaufschachts 9 eines Siebbodens 7. Alternativ oder ergänzend dazu wird Flüssigkeit aus dem im Kondensator 3 gebildeten Salpetersäure enthaltenden Kondensat entnommen und über eine Zuleitung 29 dem Reaktor 24 zugeführt.

Im Reaktor 24 herrscht während der Zuführung der Flüssigkeit aus der Absorptionskolonne 5 über die Zuleitungen 27, 28, 29 eine kalte, sauerstoffreiche Atmosphäre vor. Der zur Herstellung dieser Atmosphäre erforderliche Sauerstoff wird einer Quelle 30 für Sauerstoff entnommen, bei dem es sich beispielsweise um einen Tank für flüssigen Sauerstoff oder um einen Druckbehälter für gasförmigen Sauerstoff handelt. Der Sauerstoff wird in Gasform, jedoch kalt, über eine Sauerstoffzuleitung 31 dem Kopfraum des Reaktors 24 zugeführt und dort eingesprüht. Liegt der Sauerstoff in der Quelle 30 in flüssiger Form vor, durchläuft der Sauerstoff einen Kaltvergaser 32, im Falle von gasförmig bevorratetem Sauerstoff durchläuft der Sauerstoff einen Kühler 33. Durch die Zuführung des kalten Sauerstoffs beträgt die Temperatur der Atmosphäre im Reaktor 24 nur wenig mehr als die Gefriertemperatur der zugeführten Flüssigkeit, beispielsweise beträgt die Temperatur der Atmosphäre zwischen 0°C und -40°C. Um eine möglichst feine Verteilung der Flüssigkeit in der sauerstoffreichen Atmosphäre zu erzielen, sind die Zuleitungen 27, 28, 29 mündungsseitig mit Sprühdüsen 34 ausgerüstet.

Im Betrieb des Reaktors 24 werden die Flüssigkeit aus der Absorptionskolonne 5 und der Sauerstoff mit gleicher Strömungsrichtung in den Reaktor 24 eingetragen. Die Versprühung der Flüssigkeit über die Sprühdüsen 34 sorgt für ein fein in der kalten, sauerstoffreichen Atmosphäre verteiltes Aerosol. In der eingetragenen Flüssigkeit sind Stickoxide gelöst, die bei der Zerstäubung in die Gasphase übergehen und in der sauerstoffreichen Atmosphäre gemäß der oben aufgeführten Reaktionen (3) bis (13) zunächst zu Peroxy-Radikalen und in weiterer Folge zu Salpetersäure und Peroxosalpetersäure reagieren. Im Sumpf 35 des Reaktors 24 sammelt sich somit eine Peroxosalpetersäure enthaltende Lösung an, die über eine Ausleitung 36 zur weiteren Verwendung abgezogen wird.
Zur Aufkonzentration des Peroxosalpetersäuregehalts in der Peroxosalpetersäure enthaltenden Lösung in Ausleitung 36 kann ein Teil der Flüssigkeit auch aus der Ausleitung 36 abgezogen und über eine Leitung 37 in eine Absorptionskolonne 4, 5 rückgeführt werden. Bevorzugt erfolgt dabei die Einleitung der Peroxosalpetersäure enthaltenden Lösung im Bereich eines (geodätisch gesehen) oberen oder mittleren Siebboden 7 der Absorptionskolonne 5 oder der Absorptionskolonne 4. Sauerstoffreiches Gas aus der Reaktoratmosphäre wird über eine Leitung 38 abgezogen, die unterhalb der untersten Füllkörperkolonne 26 und oberhalb des Sumpfes 35 im Reaktor 24 ausmündet. Das sauerstoffreiche Gas kann entweder der Abgasleitung 23 zugeführt oder in anderen chemischen Prozessen weiterverwendet werden. Im Ausführungsbeispiel wird das Gas aus der Leitung 38 in die Steigleitungen 14, 21 oder in die Ableitung 16 eingespeist, wo es zumindest teilweise im in der durch die Leitungen 14, 16, 21 geführten Lösung enthaltenen Stickoxiden unter Bildung von Salpetersäure reagiert. Die Bildung von Salpetersäure wird dabei durch die tiefe Temperatur des zugeführten sauerstoffreichen Gases unterstützt.

Da sich HNO₄ nach den Reaktionen (14) - (18) mit Stickoxiden zu Salpetersäure umsetzt, ist es insbesondere möglich, die sich im Sumpf 35 ansammelnde Peroxosalpetersäure enthaltende Lösung in einem Verfahren zur Produktion von Salpetersäure zu verwenden, indem sie beispielsweise im Kopfraum der jeweils letzten Absorptionskolonne 5 eingespeist wird und damit zu einer wesentlichen Verbesserung der Absorptionsfähigkeit dieser Kolonne führt. Damit kann der Gehalt an NOₓ - Abgasen, welche die Absorptionskolonne 5 in Richtung der Entstickungsanlage verlassen wesentlich reduziert werden. Die NOₓ-Reduktion wird zudem dadurch unterstützt, dass sich Peroxosalpetersäure gemäß Reaktion (3) zu Wasserstoffperoxid und Salpetersäure umsetzt, und somit die in die Absorptionskolonne 5 eingespeiste Peroxosalpetersäure enthaltene Lösung bereits einen wesentlichen Anteil von Wasserstoffperoxid besitzt. Die positive Wirksamkeit von Wasserstoffperoxid zur Reduktion von NOₓ-Abgasen ist an sich bekannt und wurde gelegentlich bereits in der Salpetersäureproduktion verwendet. Aufgrund von ökonomische Rahmenbedingungen und Explosionsschutzvorschriften wurde das teure und schwierig zu verarbeitende Wasserstoffperoxid bislang jedoch nur in seltenen Fällen eingesetzt. Demgegenüber liefert die Erfindung eine kostengünstige und sichere Möglichkeit zur Einleitung von Wasserstoffperoxid in eine Absorptionskolonne 5.

Besonderes Augenmerk sollte in diesem Zusammenhang dem äußerst klimaschädlichen N₂O zugewendet werden, welchem verglichen mit CO₂ ein um den Faktor 310 höheres klimaschädliches Gefährdungspotenzial zukommt. Hierbei ist durch den erfindungsgemäßen Einsatz der stark oxidationsfreudigen HNO₄ eine Möglichkeit gegeben, dieses reaktionsträge Molekül gemäß folgender Reaktionsgleichung zu oxidieren:

(19) 2 O₂N-O-OH + N₂O + H₂O 2 HNO₃ + 2 HNO₂

Salpetersäureanlagen gehören im Industriesegment der chemischen Industrie zu den größten Emittenten von N₂O. Seit 2013 sind N₂O - Emissionen von Salpetersäureanlagen im ETS (Emission Trading System) enthalten, wodurch die Anlagen-Betreiber großes Interesse an der Reduktion dieser Emissionen hegen.

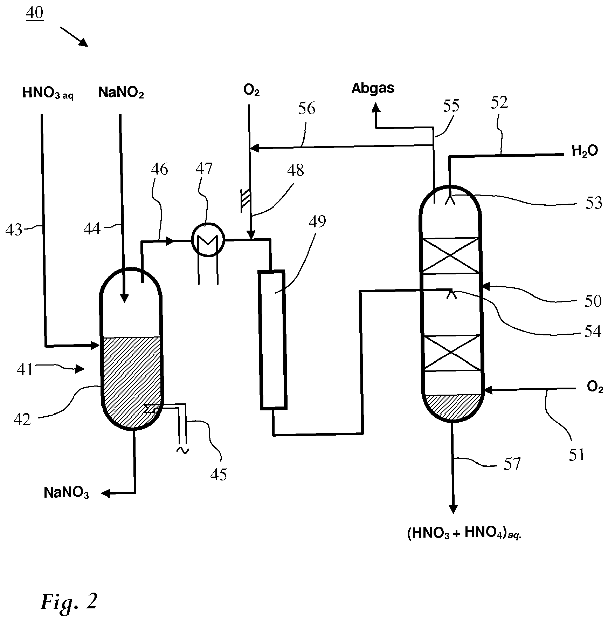

Die in Fig. 2 gezeigte Produktionsanlage 40 ermöglicht die kostengünstige Herstellung von Peroxosalpetersäure auch an Standorten, an denen keine Produktionsanlage zur Herstellung von Salpetersäure zur Verfügung steht. Wesentlich ist lediglich das Vorhandensein einer möglichst konzentrierten Stickoxidquelle. Im Ausführungsbeispiel nach Fig. 2 handelt es sich bei dieser um eine Apparatur 41 zur Entwicklung von NOx-Gas aus Natriumnitrit (NaNO₂) und Salpetersäure. Die Apparatur 41 umfasst einen druckfesten Reaktionsbehälter 42, in den eine Zuleitung 43 für Salpetersäure enthaltende Lösung sowie eine Zuleitung 44 zum Zuführen von Natriumnitrit in fester Form oder gelöst einmündet.

Anstelle von Natriumnitrit könnte ebenso andere Nitrite als Ausgangsmaterial verwendet werden. Beispielsweise können Kaliumnitrit (KNO₂), Ammoniumnitrit (NH₄NO₂), Calciumnitrit (Ca(NO₂)₂), Magnesiumnitrit (Ca(NO₂)₂) o.ä. Rohstoffe zum Einsatz gelangen. Anstelle von Salpetersäure kann auch eine andere Mineralsäure (im folgenden HX genannt) zum Einsatz gelangen. Wesentlich ist, dass die eingesetzte Säure mit dem zugefügten NaNO₂ bzw. anderem Nitrit unter der Bildung von HNO₂ und einem Salz NaX reagiert:

(20) NaNO₂ + HX → HNO₂ + NaX

Die hier nicht weiter interessierende NaX-haltige Lösung wird über eine Ableitung abgeführt. Die sich bildende salpetrige Säure (HNO₂) wird anschließend gemäß an sich bekannter Abbaureaktionen zersetzt. Dabei zersetzt es sich umso schneller, je höher die Temperatur der Säure ist. Demzufolge ist für die Apparatur 41 eine erhöhte Säuretemperatur vorteilhaft, die beispielsweise mittels einer Heizeinrichtung 45 im Reaktor oder in einer Zuleitung 43, 44 realisiert wird. Bevorzugt liegt die knapp, beispielsweise 1 bis 5 K, unter der Siedetemperatur der im Behälter 42 vorliegenden Flüssigkeit. Folgende Reaktionen laufen dabei im Behälter 42 ab:

(21) 2 HNO₂ → NO + NO₂ + H₂O

(22) 3 HNO₂ HNO₃ + 2NO + H₂O

Das so hergestellte NOₓ Gas bzw. N₂O₄ wird über eine Leitung 46 abgeführt und in einem Wärmetauscher 47 abgekühlt. Anschließend erfolgt über eine in die Leitung 46 einmündende Sauerstoffzuleitung 48 eine Zugabe von kaltem oder tiefkalten Sauerstoff, mittels dessen eine weitere Oxidation und eine weitere Abkühlung erfolgt. Das so hergestellte gekühlte Gasgemisch wird durch einen Reaktor, beispielsweise einen Rohrreaktor 49, geführt, in welchem folgende Reaktion abläuft:

(23) 2 NO + O₂ ⇆ 2 NO₂ ⇆ N₂O₄

Anschließend tritt das Stickoxide enthaltende Gas im mittleren Bereich eines Reaktors 50 ein, in dem eine kalte Atmosphäre vorherrscht. Die Atmosphäre im Reaktor 50 wird - zusätzlich zur Kühlung durch die Zuführung des Stickoxide enthaltenden Gases - durch konventionelle Kühltechniken und/oder durch kontinuierliche Zufuhr von tiefkaltem flüssigem Sauerstoff über eine am Boden des Reaktors 50 einmündende, thermisch gut isolierte Zuleitung 51 gekühlt. Am Kopf des Reaktors 50 wird Wasser über eine Zuleitung 52 an einer Düse 53 eingesprüht. Die Zuführung des N₂O₄ enthaltenden Gases erfolgt an einer Sprühdüse 54.

Dabei stellt sich innerhalb des Reaktors 50 ein Temperaturgradient ein. Die Temperaturen am Sumpf des Reaktors 50 werden auf einen Wert in der Nähe des Gefrierpunktes der sich bildenden HNO₃/HNO₄ enthaltenden Lösung eingestellt, also beispielsweise zwischen -20°C bis -40°C. Am Kopf des Reaktors 50 beträgt die Temperatur ca. 0 bis -20°C. Um ein Einfrieren des über Zuleitung 52 aufgegebenen Wassers zu vermeiden, kann dort anstelle von reinem Wasser auch verdünnte HNO₃ - Lösung oder aus einer Salpetersäureproduktion bereitgestellte Schwachsäure eingesetzt werden, wodurch sich der Gefrierpunkt verringert. Darüber hinaus kann durch entsprechende, hier nicht gezeigte Heizelemente an der Düse 53 sowie der Sprühdüse 54 am Ausgang der Zuleitung 46 das Einfrieren der jeweils zugeführten Flüssigkeit vermieden werden.

Im oberen Teil des Reaktors 50 bilden sich aus N₂O₄ und Wasser die Säuren HNO₂ und HNO₃:

(24) N₂O₄+ H₂O → HNO₂ + HNO₃

Die so gebildete HNO₂ ist unter den kühlen Prozessbedingungen deutlich stabiler als beispielsweise in einem herkömmlichen Produktionsprozess zur Gewinnung von Salpetersäure. Aus diesem Grunde werden im unteren Bereich des Reaktors 50 bei den dort vorherrschenden, noch niedrigeren Temperaturen bei der Umsetzung der salpetrigen Säure HNO₂ mit dem über Zuleitung 51 eingespeisten Sauerstoff deutlich höhere Konzentrationen an HNO₄ in der sich dort bildenden HNO₄ enthaltenden Lösung erzielt.

Die Bildung von HNO₄ erfolgt dabei zu einem gewissen Teil durch Direktoxidation in der flüssigen Phase:

(25) HNO₂ + O₂ → HNO₄

Zudem laufen im Gasraum die weiter oben angeführten Reaktionen (4) bis (9) ab, wodurch sich hier in der tiefkalten Sauerstoff-Atmosphäre vor allem das unter Reaktion (9) beschriebene Peroxynitrat-Radikal (O₂N-O-O•) bildet, welches bei Kontakt mit der wässrigen Phase unter der Bildung von HNO₄ und HNO₃ abreagiert. Weiterhin reagiert eingetragenes N₂O₄ nach Reaktion (14) gemeinsam mit Sauerstoff und Wasser zu HNO₄ und HNO₃.

Das im Reaktor 50 gebildete, sauerstoffreiche Abgas wird über eine Abgasleitung 55 abgeführt und kann in einem anderweitigen Prozess nutzbringend verwendet werden. Es insbesondere möglich, dieses Abgas teilweise über eine optionale Verbindungsleitung 56 in den Sauerstoffstrom in Sauerstoffzuleitung 48 einzuspeisen, wodurch ein Kreislauf geschlossen werden kann und somit der eingesetzte Sauerstoff möglichst effizient verwertet wird. Zur Vermeidung der Anreicherung von Inertgasen (vor allem N₂ und Ar) in diesem Kreislauf muss ein kleiner Anteil des Gases jedoch als Purge-Gas über die Abgasleitung 55 ausgeschleust werden, das wiederum anderweitig genutzt werden kann.

Die HNO₄ enthaltende Lösung wird über eine Produktausleitung 57 angeführt und sollte in weiterer Folge gekühlt gelagert bzw. transportiert werden. Dabei können beispielsweise vakuumisolierte Tankanlagen eingesetzt werden, wie sie beispielsweise beim Lagern und Transportieren von tiefkalten verflüssigten Gasen eingesetzt werden. Zudem kann die HNO₄ enthaltende Lösung durch weitere physikalische Trennverfahren, wie beispielsweise Rektifikation, Vakuumdestillation, o.ä., in seine stabilen Bestandteile H₂O₂ und HNO₃ aufgetrennt und diese großtechnisch nutzbaren Anwendungen zugeführt werden.

Des Weiteren kann durch Neutralisation mit Alkali- oder Erdalkalilaugen Salze erhalten werden, welche als H₂O₂ enthaltende Mischkristalle bekannt sind. Beispielsweise kann durch Reaktion mit NaOH "Natriumperoxonitrat" hergestellt werden, welches als Octohydrat (NaNO₃.H₂O₂.8H₂O) literaturbekannt ist.

### Bezugszeichenliste

1. Produktionsanlage
2. Ammoniak-Verbrennungsanlage
3. Kondensator
4. Absorptionsturm
5. Absorptionsturm
6. Bleichkolonne
7. Siebboden
8. Ablaufwehr
9. Ablaufschacht
10. Sumpf
11. Sumpf
12. Gaszuleitung
13. Steigleitung
14. Steigleitung
15. -
16. Ableitung
17. Produktausleitung
18. Leitung
19. Gasableitung
20. Wasserzuleitung
21. Steigleitung
22. -
23. Abgasleitung
24. Reaktor
25. Füllkörperkolonne
26. Füllkörperkolonne
27. Zuleitung
28. Zuleitung
29. Zuleitung
30. Quelle (für Sauerstoff)
31. Sauerstoffzuleitung
32. Kaltvergaser
33. Kühler
34. Sprühdüse
35. Sumpf
36. Ausleitung
37. Leitung
38. Leitung
39. -
40. Produktionsanlage
41. Apparatur
42. Behälter
43. Zuleitung
44. Zuleitung
45. Heizeinrichtung
46. Leitung
47. Wärmetauscher
48. Sauerstoffzuleitung
49. Rohrreaktor
50. Reaktor
51. Zuleitung
52. Zuleitung
53. Düse
54. Düse
55. Abgasleitung
56. Verbindungsleitung
57. Produktausleitung

## Patentansprüche

1. Verfahren zum Herstellen von Peroxosalpetersäure (HNO₄), **gekennzeichnet durch** die folgenden Schritte:
a. Zuführung eines sauerstoffreichen Gases an einen Gas-Flüssig-Reaktor (24, 50) zur Erzeugung einer sauerstoffreichen Atmosphäre,
b. Kühlen der sauerstoffreichen Atmosphäre im Gas-Flüssig-Reaktor (24, 50) auf eine Temperatur unterhalb der Umgebungstemperatur,
c. Versprühen eines Stickoxide enthaltenden Gases und/oder einer Stickoxide enthaltenden Lösung sowie von Wasser in die im Gas-Flüssig-Reaktor (24, 50) vorliegenden kalten, sauerstoffreichen Atmosphäre, wobei sich das Stickoxide enthaltende Gas bzw. die die Stickoxide enthaltende Lösung mit Sauerstoff zu einer HNO₄-haltigen Lösung umsetzt, die sich im Sumpf des Gas-Flüssig-Reaktors (24, 50) ansammelt,
d. Abziehen der sich im Sumpf des Gas-Flüssig-Reaktors bildenden, HNO₄-haltigen Lösung.

2. Verfahren nach Anspruch 1, **dadurch gekennzeichnet, dass** die Atmosphäre im Gas-Flüssig Reaktor (24, 50) auf eine Temperatur von unter 0°C, bevorzugt auf eine Temperatur zwischen 0,1 K und 5 K über dem Gefrierpunkt der HNO₄-haltigen Lösung abgekühlt wird.

3. Verfahren nach Anspruch 1 oder 2, **dadurch gekennzeichnet, dass** der Sauerstoffgehalt des dem Gas-Flüssig-Reaktor (24, 50) zugeführten sauerstoffreichen Gases mindestens 90 Vol.-%, bevorzugt mindestens 95 Vol.-% beträgt.

4. Verfahren nach einem der vorhergehenden Ansprüche, **dadurch gekennzeichnet, dass** sich im Gas-Flüssig-Reaktor (24, 50) bildendes, sauerstoffreiches Abgas in einem Prozess zur Herstellung von Salpetersäure eingesetzt wird.

5. Verfahren nach einem der vorhergehenden Ansprüche, **dadurch gekennzeichnet, dass** die HNO₄-haltige Lösung in einem Verfahren zur Erzeugung von Salpetersäure eingesetzt wird.

6. Verfahren nach einem der vorhergehenden Ansprüche, **dadurch gekennzeichnet, dass** die HNO₄-haltige Lösung durch weitere Trennverfahren in seine stabilen Bestandteile H₂O₂ und HNO₃ aufgetrennt wird.

7. Verfahren nach einem der vorhergehenden Ansprüche, **dadurch gekennzeichnet, dass** das Stickoxide enthaltende Gas bzw. die Stickoxide enthaltende Lösung in einem Prozess zur Herstellung von Salpetersäure gewonnen wird.

8. Verfahren nach einem der vorhergehenden Ansprüche, **dadurch gekennzeichnet, dass** das Stickoxide enthaltende Gas bzw. die Stickoxide enthaltende Lösung durch Umsetzung eines Nitrits (Y-NO₂) mit einer Mineralsäure gewonnen wird.

9. Verfahren nach einem der vorhergehenden Ansprüche, **dadurch gekennzeichnet, dass** das Stickoxide enthaltende Gas bzw. die Stickoxide enthaltende Lösung durch Umsetzung von Ammoniak mit Sauerstoff gewonnen wird.

10. Vorrichtung zur Durchführung des Verfahrens nach einem der vorhergehenden Ansprüche, mit einer Apparatur (41) zur Herstellung eines Stickoxide enthaltendes Gases und/oder einer Stickoxide enthaltenden Lösung, mit einem Gas-Flüssig-Reaktor (24, 50), in den eine in einer Düse (34, 54) ausmündende Zuführung (27, 28, 29, 46) für das Stickoxide enthaltendes Gas und/oder die Stickoxide enthaltende Lösung, eine Sauerstoffzuführung (31, 51), eine Ableitung (36, 57) für eine in einem Sumpf des Reaktors sich bildende Flüssigkeit sowie eine Gasableitung (38, 55) zum Abführen von sauerstoffreichem Abgas einmünden, und mit einer Einrichtung (30, 33, 47) zur Kühlung des dem Reaktor zuzuführenden Stickoxide enthaltenden Gases und/oder der Stickoxide enthaltenden Lösung und/oder des dem Reaktor zuzuführenden Sauerstoffs.

11. Vorrichtung nach Anspruch 10, **dadurch gekennzeichnet, dass** die Apparatur zur Herstellung eines Stickoxide enthaltenden Gases und/oder einer Stickoxide enthaltenden Lösung einen Absorptionsturm (4, 5) und/oder einen Kondensator (3) einer Anlage zur Erzeugung von Salpetersäure umfasst.

12. Vorrichtung nach Anspruch 10 oder 22, **dadurch gekennzeichnet, dass** die Apparatur (41) zur Herstellung eines Stickoxide enthaltenden Gases und/oder einer Stickoxide enthaltenden Lösung einen Behälter (42) umfasst, in den eine Zuleitung (43) für eine Mineralsäure und eine Zuführung (44) für ein Nitrit einmündet.

13. Vorrichtung nach einem der Ansprüche 10 bis 12, **dadurch gekennzeichnet, dass** der Gas-Flüssig-Reaktor (24, 50) mindestens zwei, jeweils voneinander durch einen Gasraum getrennte Füllkörperkolonnen (25, 26) aufweist.
